# EUROPEAN PATENT SPECIFICATION

(11) **EP 0 624 838 B1**
(45) Date of publication and mention of the grant of the patent: **17.10.2001**
(21) Application number: 94302614.6
(22) Date of filing: 13.04.1994
(51) Int. Cl.: G06F 7/00

(54) **Apparatus and method for deinterleaving**
Vorrichtung und Verfahren zur Entschachtelung
Appareil et procédé pour desimbrications

(30) Priority: 13.04.1993 FI 931648
(43) Date of publication of application: 17.11.1994
(73) Proprietor: NOKIA MOBILE PHONES LTD., 24101 Salo (FI)
(72) Inventor: Kuusinen, Tero, SF-20540 Turku (FI)
(74) Representative: Frain, Timothy John

(56) References cited:
- EP-A- 0 439 412
- GB-A- 2 160 685
- US-A- 5 063 533
- IBM TECHNICAL DISCLOSURE BULLETIN., vol.9, no.7, December 1966, NEW YORK US pages 884 - 885 'Translating buffer storage unit'

## Description

The invention relates to an apparatus and method for deinterleaving, in particular for implementing deinterleaving in a paging system.

It is common practice in communication systems for a transmitter to arrange the data bits to be transmitted into a different order prior to their transmission. This is known as interleaving. The advantage of such interleaving is that burst errors on the transmission channel can be spread throughout the data. For example, if the data consisted of a plurality of code words the interleaving would temporally disperse the data bits representing individual code words. Thus, only parts of a code word would be affected by burst errors and thus error correction of such burst errors is enhanced. Such interleaving has to be reversed or undone at the receiver, and this is known as de-interleaving.

A typical known example of a system using interleaving involves the transmission of 30 bit code words. Groups of 9 code words are interleaved and this results in 270 bit deep interleaving. In this known example the most significant bit (MSB) of code word 0 is transmitted first, then the MSB of code word 1 etc. and continuing sequentially through to the least significant bit (LSB) of code word 8.

The following array illustrates the form which the transmitted data takes.

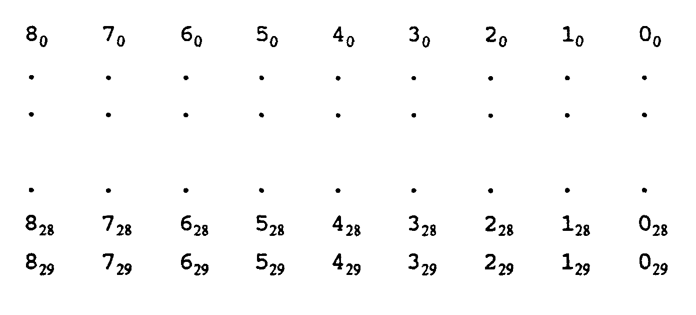

The bit array is formed by writing one code word at a time into a memory column by column, and reading the memory row by row, thus carrying out the interleaving. In this array, for example, 4₂₈ stands for the 28th bit of the 4th code word.

In the prior art, deinterleaving is generally performed using a random access memory (RAM) equipped with a serial bus, since the data is written into the RAM in one direction and read from it in another, relative to the columns and rows of the RAM.

If, for example, 8-bit words are used for loading the RAM, the reading out is difficult to implement. If it is necessary to use serial-form RAM, the number of memory addresses required is equal to the number of memory elements, and in the present embodiment this is 30 x 9 = 270. The state-of-the-art method is very complicated and takes up a lot of the address space of the RAM.

GB 2160685 discloses a data reorganisation apparatus for video signal processing. The apparatus includes a dual buffer arrangement in which data is written into each buffer by rows and is read out by columns.

US 5,063,533 discloses a reconfigurable deinterleaver where the memory array is configured with predetermined parameters to define the number and length of the interleaved codewords to be interleaved. The memory array is written row by row and read in parallel column by column.

In a first aspect the present invention provides apparatus for deinterleaving data as defined in independent claim 1, and in a second aspect the invention provides method for deinterleaving data as defined in independent claim 2.

An advantage of the present invention is that it reduces the amount of address space required by the RAM and thus reduces the overall space required by the RAM. This means that a higher degree of integration becomes possible which reduces cost, weight and volume constraints for products using the invention.

An embodiment of the invention is described below in detail by way of example only, and with reference to the accompanying figures, in which:
- Figure 1: depicts the structure of a memory cell used in the circuitry in accordance with the invention,
- Figure 2: depicts the structure of a memory element, used in the circuitry in accordance with the invention, made up of memory cells,
- Figure 3: depicts the implementation of the writing into the memory, in accordance with the method according to the invention,
- Figure 4: depicts the implementation of the reading from the memory, in accordance with the method according to the invention.

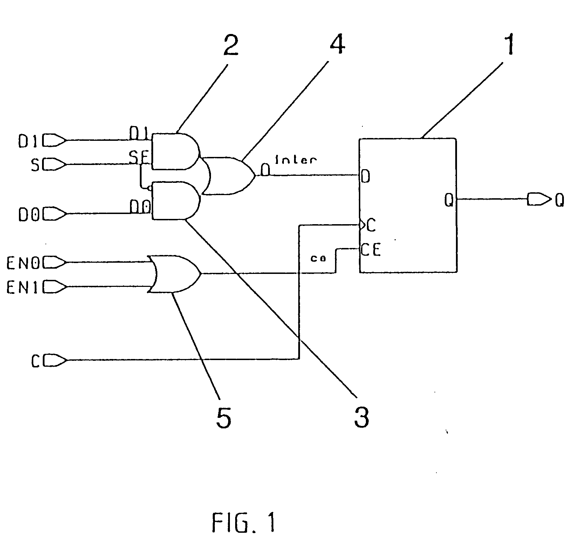

Figure 1 shows the structure of a memory element used in an embodiment in accordance with the invention. The memory element is a D flip-flop 1 having a multiplexed input. The input has AND gates 2 and 3 and OR gates 4 and 5.

Such multiplexing makes it possible to carry out the writing and the reading to the RAM in different directions, writing being done horizontally and reading vertically.

D-type flip-flop 1 has a data input D, a clock input C, a clock enable input CE and an output Q. One, other or both inputs ENO and EN1 of OR gate 5 being HI results in a HI at input CE. Data on lines DO and D1 is input to D when line 5 is LO or HI respectively.

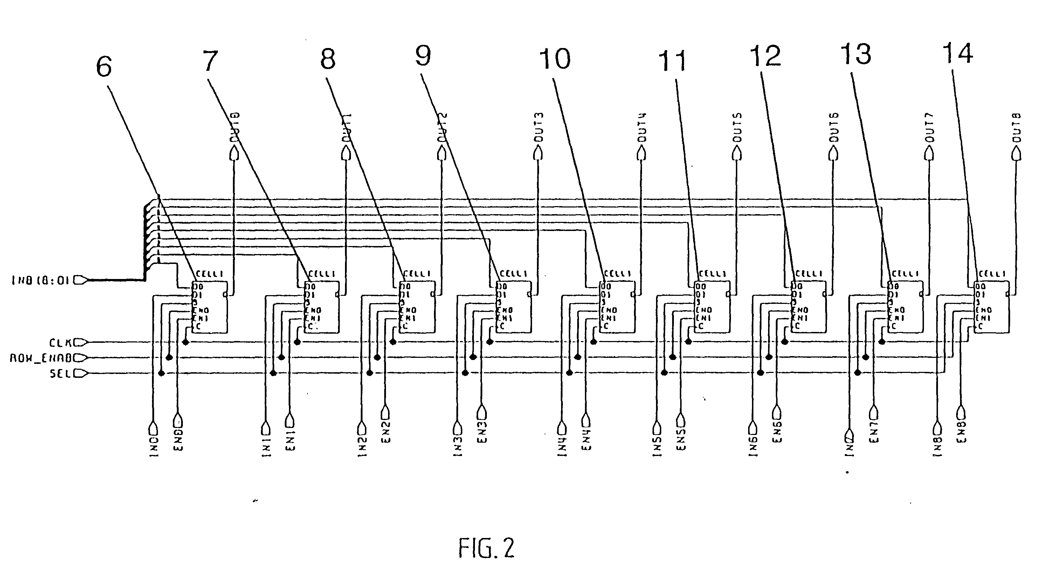

Figure 2 shows the structure of the memory, comprising memory elements utilising circuitry in accordance with the invention. Memory elements 6 - 14 are arranged so that there are 9 in each row. 30 such rows are placed vertically in succession, to form a RAM comprising 30 rows x 9 columns. One row at a time, i.e. 9 bits at a time, is written into this memory. Since the data is transmitted to the receiver in serial form, it must be converted into parallel form prior to being input to the memory. Such a conversion is easy to implement using a simple well known transfer register. The writing into the memory is started from the bottom row, the address of which is 01 (HEX).

Each memory element in a row has its DO data line connected to respective data lines 0 to 8 of data lines IN8(8:0), and its D1 data line connected to respective data lines 0 to 8 of data bus IN (0...8). Column enable lines EN0 to EN8 are input to respective EN1 inputs of memory elements (1) in each row and respective row enable lines ROW-ENAB are input to EN0 inputs of memory elements in respective rows. Clock and select signals are connected to the C and S inputs respectively of each memory element.

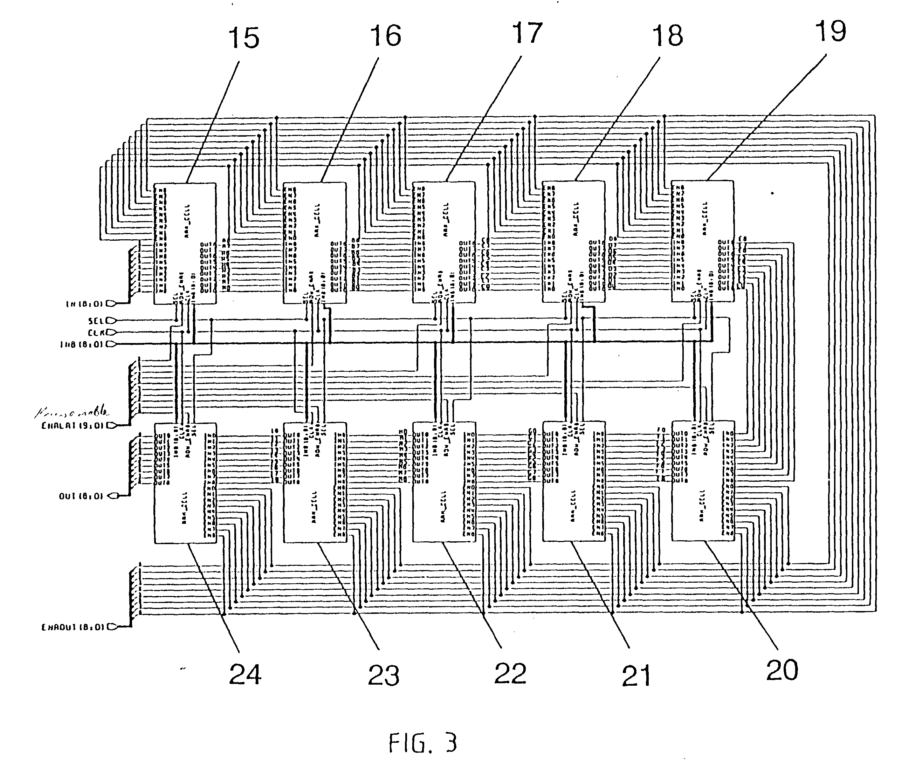

Figure 3 shows an embodiment of the invention in which the RAM comprises 10 RAM cells 15...24 sequentially connected together via their output buses OUT(0...8) and input data buses IN(0...8). Each RAM cell 15...24 has input to its clock enable inputs EN(0...8) enable signals ENAOUT (8:0).

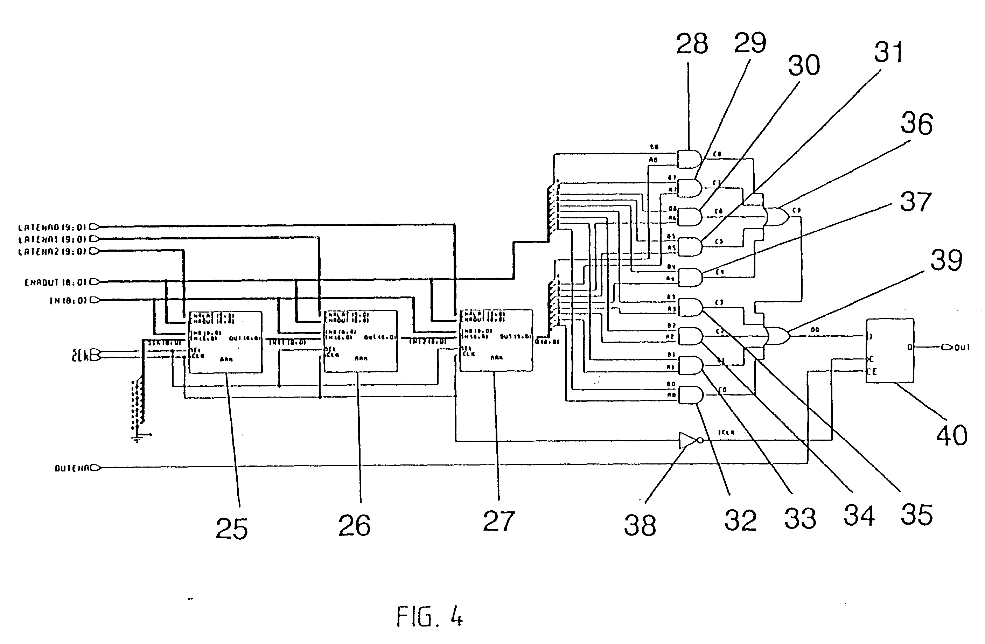

Figure 4 shows three RAMS, 25, 26, 27 coupled together via their output and input buses OUT (8...0), IN (8...0) respectively. The output bus OUT (8...0) of RAM 27 is coupled via selecting logic 28...39 under control of respective enable lines ENAOUT (8:0) to D type flip flop 40 such that data stored in the RAMS 25, 26, 27 is output serially.

When writing data into the RAM, the non-active LO state of the multiplexing selection line SEL is asserted. Thus, data lines DO are active for each memory element; i.e. data bus IN8 (8:0). Respective rows are then selected by known addressing methods. The addressing method activates the ROW-ENAB line of a first row, enabling the clock inputs of the memory elements of that row. Then the first 9 bits from the series to parallel converter are clocked in parallel into that row.

Memory elements 15 - 24 are disposed such that the i^{th} memory element 15 - 24 of each row, i.e. the write input of memory element 15 - 24, is wired to the i^{th} bit of the series to parallel converter. On the address being changed, the ROW-ENAB line of the row corresponding to this new address is activated and the ROW-ENAB line of the previous row is deactivated. Again, the arrival of 9 bits is waited for, whereafter this nine-bit word is clocked into the memory elements. This procedure is continued until all of the 30 rows have been loaded.

On reading data from RAM the active HI state of the multiplexing selection line SEL is asserted. Each column of the RAM is addressed using enable signals ENAOUT (8:0) which are coupled to clock enabling lines ENO...EN8 of memory cells in respective columns 0 to 8. To read the data the addressing method activates the signal EN0 first, thus enabling the clock input of the memory elements of column 0. Thereafter the data in the column (30 bits) is sequentially read from the column.

The memory elements are coupled vertically in series so that, in reading out, an entire 30 bit-word is obtained with 30 clock cycles from the RAM, with the MSB first. When the addresses have been selected, the entire 30-bit column is clocked out by using the CLK signal. When the whole word has been read out, a new address is selected, which activates a new ENO .. EN7 line, and the word corresponding to this address can be read out.

The selection of output lines OUT (8:0) is carried out by logic gates 28 to 39 under control of enable signals ENAOUT (8:0).

Either one or more RAMs described above can be used for deinterleaving. In the event that two RAMs are used, when one is being loaded, i.e. it is being written into, the other one is being unloaded, i.e. it is being read from simultaneously. If only one RAM is used, the memory is read into in the normal manner until even the last row has been loaded. Thereafter, the memory is unloaded while the next 9 bits are being received. This, however, sets high speed requirements on the blocks subsequent to the deinterleaving.

For a RAM thus wired, the generation of addresses is quite easy, since the rows and columns are loaded/unloaded in order. Before the loading/unloading beings, the address counters are set to zero. The desired next address is produced by clocking the address counters one step forward. Thus the memory control is very easy, and it can be effected by using two address counters.

In the present specification, a deinterleaving depth (30 x 9 bits) compatible with the ERMES system is discussed, but the same method can be used for implementing any depth of deinterleaving. The method according to the invention is very suitable for use in an ERMES paging system.

By means of the invention, deinterleaving can be implemented with very little address coding. The basic memory elements have multiplexed inputs. If these inputs are wired in the manner according to the invention, deinterleaving can be implemented in a simple manner.

In the apparatus and method in accordance with the invention, only 30 addresses are required for the writing in and 9 addresses for the reading out, i.e. in total 30 + 9 = 39 addresses. This makes it possible to use only one RAM for effecting the deinterleaving, since only one address is required for the reading of 30 bits, instead of the 30 addresses required in a conventional method.

The invention is significant mainly when so high a speed is required in interleaving or deinterleaving that the processor in the device will not have time to carry out the operation through software. The method according to the invention speeds up the operation considerably.

## Claims

1. Apparatus for deinterleaving data received by a receiver comprising a memory means (25,26,27) including memory elements (6...14,15...24) having respective multiplexed inputs and outputs, and arranged in an array of columns and rows, the output of a memory element in a column being coupled to one of said multiplexed inputs of the next memory element in said column, wherein the number of columns corresponds to the number of code words input to the memory means (25, 26, 27) and wherein each row comprises a number of memory elements corresponding to the number of bits in a code word input to the memory means (25, 26, 27), the memory means (25,26,27) having addressing means for writing data into the memory means (25, 26, 27) row by row through the other of said multiplexed inputs of said memory elements and for reading data from the memory means (25, 26, 27) column by column wherein, data is written into the memory means (25, 26, 27) by the addressing means in parallel into respective rows, wherein the memory means (25, 26, 27) is used in a normal way until the last row has been loaded, whereafter the memory means (25, 26, 27) is read sequentially column by column by the addressing means, wherein the output of the memory means is serialised, the arrangement being such that the number of memory addresses used by the addressing means is the sum of the number of the rows and columns.

2. A method for deinterleaving data received by a receiver comprising RAM including memory elements (6...14,15...24) having respective multiplexed inputs and outputs and arranged in an array of columns and rows, the output of a memory element in a column being coupled to one of said multiplexed inputs of the next memory element in said column, wherein the number of columns corresponds to the number of code words input to the RAM (25, 26, 27) and wherein each row comprises a number of memory elements corresponding to the number of bits in a code word input to the RAM (25, 26, 27), the RAM (25,26,27) having addressing means for writing data into the RAM (25, 26, 27) row by row through the other of said multiplexed inputs of said memory elements and for reading data from the RAM (25, 26, 27) sequentially column by column, said method comprising sequentially selecting a row into which data is to be written,
enabling clock inputs of said memory elements of said row,
clocking data into the memory elements of said row,
selecting a next row into which next data is to be written and deselecting said row and continuing the above steps until the data has been loaded into the RAM, the RAM being used in a normal way until the last row has been loaded, whereby data is written into the RAM by the addressing means in parallel into respective rows, and sequentially
selecting a column from which data is to be read,
enabling clock inputs of memory elements of said column,
clocking data from the memory elements of said column thereby forming a serial output, and
selecting a next column from which data is to be read and deselecting said column and continuing the above steps until the data has been read from the RAM, wherein the RAM is read sequentially column by column by the addressing means,
the arrangement being such that the number of memory addresses used by the addressing means is the sum of the number of the rows and columns.

3. A method according to claim 2, wherein two RAMS are used in such a manner that when one is being written into, reading out from the other takes place simultaneously.

4. A method according to claim 2 or claim 3, wherein the selection of rows and columns is implemented by setting address counters to zero before beginning loading/unloading RAM thereafter the desired next row or column is obtained by clocking the address counters one step forward.

## Patentansprüche

1. Vorrichtung zur Entschachtelung von Daten, die durch einen Empfänger empfangen werden, der eine Speichereinrichtung (25, 26, 27) enthält, die Speicherelemente (6...14, 15...24) mit gemultiplexten Eingängen bzw. Ausgängen enthält, die in einer Matrix aus Spalten und Zeilen angeordnet sind, wobei der Ausgang eines Speicherelementes in einer Spalte mit einem der gemultiplexten Eingänge des nächsten Speicherelementes in dieser Spalte gekoppelt ist, wobei die Anzahl von Spalten der Anzahl von in die Speichereinrichtung (25, 26, 27) eingegebenen Codewörtern entspricht und jede Zeile eine Anzahl von Speicherelementen enthält, die der Anzahl von Bits in einem in die Speichereinrichtung (25, 26, 27) eingegebenen Codewort entspricht, wobei die Speichereinrichtung (25, 26, 27) eine Adressierungseinrichtung zum zeilenweisen Schreiben von Daten in die Speichereinrichtung (25, 26, 27) über den anderen der gemultiplexten Eingänge der Speicherelemente und zum spaltenweisen Lesen von Daten aus der Speichereinrichtung (25, 26, 27) enthält, wobei die Daten durch die Adressierungseinrichtung in die Speichereinrichtung (25, 26, 27) parallel in die betreffenden Zeilen geschrieben werden, wobei die Speichereinrichtung (25, 26, 27) in der üblichen Weise verwendet wird, bis die letzte Zeile geladen worden ist, worauf die Speichereinrichtung (25, 26, 27) durch die Adressierungseinrichtung sequentiell spaltenweise ausgelesen wird und wobei der Ausgang der Speichereinrichtung von parallel nach seriell umgesetzt wird, wobei die Anordnung derart ist, daß die Anzahl von durch die Adressierungseinrichtung verwendeten Speicheradressen die Summe der Anzahl von Zeilen und Spalten ist.

2. Verfahren zur Entschachtelung von Daten, die durch einen Empfänger empfangen werden, der einen RAM enthält, der Speicherelemente (6...14, 15...24) mit gemultiplexten Eingängen bzw. Ausgängen enthält, die in einer Matrix aus Spalten und Zeilen angeordnet sind, wobei der Ausgang eines Speicherelementes in einer Spalte mit einem der gemultiplexten Eingänge des nächsten Speicherelementes in dieser Spalte gekoppelt ist, wobei die Anzahl von Spalten der Anzahl von in den RAM (25, 26, 27) eingegebenen Codewörtern entspricht und jede Zeile eine Anzahl von Speicherelementen enthält, die der Anzahl von Bits in einem in den RAM (25, 26, 27) eingegebenen Codewort entspricht, wobei der RAM (25, 26, 27) eine Adressierungseinrichtung zum zeilenweisen Schreiben von Daten in den RAM (25, 26, 27) über den anderen der gemultiplexten Eingänge der Speicherelemente und zum sequentiellen spaltenweisen Lesen von Daten aus dem RAM (25, 26, 27) enthält, wobei das Verfahren umfaßt:
sequentielles Auswählen einer Zeile, in die Daten zu schreiben sind,
Freigeben von Takteingängen der Speicherelemente dieser Zeile,
Eintakten von Daten in die Speicherelemente dieser Zeile,
Auswählen der nächsten Zeile, in die nächste Daten zu schreiben sind, und Ausgrenzen der Zeile, Fortsetzen der obigen Schritte, bis die Daten in den RAM geladen worden sind, wobei der RAM in der üblichen Weise verwendet wird, bis die letzte Zeile geladen worden ist, wobei die Adressierungseinrichtung die Daten parallel in die betreffenden Zeilen und sequentiell in den RAM schreibt,
Auswählen einer Spalte, aus der Daten auszulesen sind,
Freigeben von Takteingängen der Speicherelemente dieser Spalte,
Austakten von Daten aus den Speicherelementen dieser Spalte, um dadurch eine serielle Ausgabe zu bilden, und
Auswählen der nächsten Zeile, aus der Daten auszulesen sind, und Ausgrenzen der Zeile, Fortsetzen der obigen Schritte, bis die Daten aus dem RAM ausgelesen worden sind, wobei der RAM in der üblichen Weise verwendet wird, bis die letzte Zeile geladen worden ist, wobei die Adressierungseinrichtung die Daten sequentiell spaltenweise aus dem RAM ausliest,
wobei die Anordnung derart ist, daß die Anzahl von durch die Adressierungseinrichtung verwendeten Speicheradressen die Summe der Anzahl der Zeilen und Spalten ist.

3. Verfahren nach Anspruch 2, wobei zwei RAM in der Weise verwendet werden, daß dann, wenn der eine beschrieben wird, das gleichzeitige Auslesen des anderen stattfindet.

4. Verfahren nach Anspruch 2 oder 3, wobei das Auswählen von Zeilen und Spalten vor Beginn des Ladens/Entladens des RAM durch das Setzen von Adreßzählern auf null ausgeführt wird und die gewünschte nächste Zeile oder Spalte anschließend durch Takten der Adreßzähler um einen Schritt vorwärts erhalten wird.

## Revendications

1. Appareil pour désimbriquer des données reçues par un récepteur comprenant un moyen de mémoire (25,26, 27) incluant des éléments mémoire (6... 14,15... 24) ayant des entrées et des sorties multiplexées respectives et disposé en une matrice de colonnes et de lignes, la sortie d'un élément mémoire dans une colonne étant couplé à une entrée desdites entrées multiplexées de l'élément mémoire suivant dans ladite colonne, dans lequel le nombre de colonnes correspond au nombre des mots de colonnes entrées dans le moyen de mémoire (25, 26, 27) et dans lequel chaque ligne comprend un nombre d'éléments mémoire correspondants au nombre de bits dans un mot de code entré dans le moyen de mémoire (25,26, 27), le moyen de mémoire (25,26, 27) ayant des moyens d'adressage pour écrire les données dans le moyen de mémoire (25,26, 27) ligne par ligne, par l'intermédiaire de l'autre entrée desdites entrées multiplexées desdits éléments mémoire et pour lire les données dans le moyen de mémoire (25,26, 27) colonne par colonne dans lequel, les données sont écrites dans le moyen de mémoire (25,26, 27) par le moyen d'adressage en parallèle dans les lignes respectives, dans lequel le moyen de mémoire (25,26, 27) est utilisé de manière normale jusqu'à ce que la dernière ligne ait été chargée, après quoi le moyen de mémoire (25, 26,27) est lu séquentiellement colonne par colonne par le moyen d'adressage, dans lesquelles la sortie du moyen de mémoire est mise en série, la disposition étant telle que le nombre des adresses mémoires utilisées par les moyens d'adressage est la somme du nombre des lignes et des colonnes.

2. Procédé pour désimbriquer des données reçues par un récepteur comprenant une mémoire vive incluant des éléments mémoire (6... 14,15... 24) ayant des entrées et des sorties multiplexées respectives et disposé en une matrice de colonnes et de lignes, la sortie d'un élément mémoire dans une colonne étant couplée à une entrée desdites entrées multiplexées de l'élément mémoire suivant dans ladite colonne, dans lequel le nombre des colonnes correspond au nombre de mots de code entré dans la mémoire vive (25,26, 27) et dans lequel chaque ligne comprend un nombre d'éléments mémoire correspondant au nombre de bits dans un mot de code entré dans la mémoire vive (25,26, 27), la mémoire vive (25,26, 27) ayant des moyens d'adressage pour écrire les données dans la mémoire vive (25,26, 27) ligne par ligne, par l'intermédiaire de l'autre entrée desdites entrées multiplexées desdits éléments mémoire et pour lire les données dans la mémoire vive (25,26, 27) séquentiellement colonne par colonne, ledit procédé comprenant les étapes consistant à sélectionner une ligne dans laquelle les données peuvent être écrites,
valider des entrées d'horloge desdits éléments mémoire de ladite ligne,
entrer par horloge les données dans lesdits éléments mémoire de ladite ligne,
sélectionner une ligne suivante dans laquelle les données suivants peuvent être écrites et désélectionner ladite ligne et continuer les étapes ci-dessus jusqu'à ce que les données aient été chargées dans la mémoire vive, la mémoire vive étant utilisée de manière normale jusqu'à ce que la dernière ligne ait été chargée, avec pour effet que les données sont écrites dans la mémoire vive par le moyen d'adressage en parallèle dans les lignes respectives et séquentiellement
sélectionner une colonne à partir de laquelle les données peuvent être lues,
valider des entrées d'horloge des éléments mémoire de ladite colonne,
sortir les données par horloge des éléments mémoire de ladite colonne, formant de ce fait une sortie série, et
sélectionner une colonne suivante à partir de laquelle les données doivent être lues et désélectionner ladite colonne et continuer les étapes ci-dessus jusqu'à ce que les données aient été lues dans la mémoire vive, dans lequel la mémoire vive est lue séquentiellement colonne par colonne par le moyen d'adressage,
la disposition étant telle que le nombre des adresses mémoires utilisées par le moyen d'adressage et la somme du nombre des lignes et des colonnes.

3. Procédé selon la revendication 2, dans lequel deux mémoires vives sont utilisées d'une manière telle que lorsque l'écriture est effectuée dans la première, la lecture s'effectue simultanément dans la seconde.

4. Procédé selon la revendication 2 ou la revendication 3, dans lequel la sélection de ligne et des colonnes est mise en oeuvre en établissant des compteurs d'adressage à zéro avant de commencer le chargement/déchargement de la mémoire vive, par la suite la ligne ou colonne désirée est obtenue en incrémentant temps par horloge des compteurs d'adresses d'un incrément vers l'avant.
